# EUROPEAN PATENT SPECIFICATION

(11) **EP 3 332 408 B1**
(45) Date of publication and mention of the grant of the patent: **19.05.2021**
(21) Application number: 16747504.5
(22) Date of filing: 03.08.2016
(51) Int. Cl.: H01B 7/02, H02K 15/10, H02K 3/30, H02K 3/40, H01B 13/00, H01B 13/08

(54) **ELECTRICAL CONDUCTOR ARRANGEMENT AND METHOD FOR PRODUCING AN ELECTRICALLY INSULATED ELECTRICAL CONDUCTOR**
ELEKTRISCHE LEITERANORDNUNG UND VERFAHREN ZUR HERSTELLUNG EINES ELEKTRISCH ISOLIERTEN ELEKTRISCHEN LEITERS
AGENCEMENT DE CONDUCTEUR ÉLECTRIQUE ET PROCÉDÉ POUR PRODUIRE UN CONDUCTEUR ÉLECTRIQUE ISOLÉ ÉLECTRIQUEMENT

(30) Priority: 03.08.2015 EP 15179539
(43) Date of publication of application: 13.06.2018
(73) Proprietor: ABB Schweiz AG, 5400 Baden (CH)
(72) Inventor: HO, Chau Hon, 79540 Lörrach (DE); RODRIGUEZ-VILCHES, Seila, 8800 Thalwil (CH); VAN-LOON, Jan, 5430 Wettingen (CH); XIE, Lei, 5507 Mellingen (CH)
(74) Representative: Zimmermann & Partner Patentanwälte mbB
(86) International application number: PCT/EP2016/068487
(87) International publication number: WO 2017/021429

(56) References cited:
- EP-A2- 2 595 159
- WO-A1-00/20157
- GB-A- 2 118 520
- US-A- 5 105 057
- US-A- 5 106 686
- US-A- 5 705 009
- Treffert: "Laser welding of plastics For joints under high mechanical stress", , January 2015 (2015-01), XP055308036, Retrieved from the Internet: URL:http://www.treffert.org/wp-content/upl oads/2014/09/150126_TREF10101ProBrosch_Las erschweissen_EN_web.pdf [retrieved on 2016-10-05]

## Description

### Technical Field

The invention relates to the field of insulated conductors for electrical power equipment, in particular longitudinal conductors, such as coils and cables. The invention further relates to a method for producing an electrically insulated electrical conductor, especially for producing an electrically insulated longitudinal electrical conductor, such as coils and cables.

### Background Art

Electrical conductors, such as coils, Roebel bars, or simpler geometries like wires and cables and the like are insulated, e.g. for insulation of voltage to ground, but also for avoiding contact between single windings of coils, if the windings are on different potentials. In some examples, conductors may be insulated for avoiding a short circuit between a HV (high voltage) component to ground in an electromotor, for example the stator of the electromotor.

For producing a longitudinal insulated conductor, lapped insulation via winding / lapping of tapes is usually applied, especially where complex shapes with many turns and bents with large geometries are involved and one-dimensional extrusion - a so-called "direct" application of insulation material - is difficult. Examples are conductor windings for electrical machines (HV coils and Roebel bars) where mica tapes are used for insulation that, however, need to be consolidated by impregnating thermosetting resin and consequent heat curing. The additional labor- and cost-intensive steps for consolidation are needed for preventing voids between the layers and conductors.

But also simple longitudinal conductors such as high voltage (HV) cables use lapped technology where insulating paper / laminate is wound around the conductor and viscous insulated fluid is used to fill the gaps (so-called mass-impregnated cables). Consolidation of thermoplastic tapes as lapped insulation wound around a conductor could be also achieved also by hot pressing after lapping. However, very high temperatures would be needed to melt all layers underneath the outer hot plates of the press risking possible degradation of the material. Furthermore, such hot press processing requires again simple geometries and does not allow large varieties of conductor shapes.

Currently, the so-called vacuum pressure impregnation (VPI) technology is used and widely applied by many electrical machine manufacturers. In this process, layers of mica tape are wound on conductors. The layers of mica tape are impregnated with thermosetting resins and thermally cured subsequently to obtain the so-called main wall insulation - the final mica-resin composite.

More remarkably, only little development has been done in the recent years on the impregnation process and materials with all drawbacks remaining: Handling of liquid resins in the workshops - usually epoxy-anhydride and polyester resin systems - causes health and safety as well as environmental issues due to evaporation of chemical gases from the large VPI tanks. Both impregnation and curing are time (numerous hours) and energy (heating of large ovens) consuming while also creating chemical fumes that have to be eliminated.

Furthermore, since only low viscosity liquid resins are applicable in this known process, the processes are restricted to thermoset materials only. The principle of mica tape impregnation - so: filling gaps with liquids - will always bear the risk of voids and partial discharge resulting into a limitation of the design field

US5105057A discloses an insulated magnet wire and method of forming a such. A conductor comprises an paper insulation sheet wrapped onto a wire in a longitudinal direction or in a spiral manner. The insulation sheet comprises a layer of thermoplastic resin pre-coated onto one side of a paper sheet. The resin covers the entire surface of the paper and when wrapped the sheet has overlapped edges bonded by locally melting an edge of the resin layer immediately before wrapping. The resin is then re-melted and re-solidified on the wire to form a smooth continuous accurate and seamless outer surface. The re-melting is performed by drawing through one or more heated dies which also reduce resin layer thickness forming an annular bead of melted resin upstream of the die.

WO 00/20157 A1 discloses a welding method wherein dye is essentially behaving as an optical focal element for the laser light.

### Brief Summary of the Invention

In view of the above, an electrical conductor arrangement according to claim 1, and a method for producing an electrically insulated electrical conductor according to claim 13 are provided. Further aspects, advantages, and features of the present invention are apparent from the dependent claims, the description, and the accompanying drawings. According to an aspect of the invention, an electrical conductor arrangement for an electrical machine is provided. The conductor arrangement includes an electrical conductor; and an insulator for electrically insulating the conductor, wherein the insulator includes an electrical insulation material. Typically, the insulator further includes at least one film including a first edge portion. The first edge portion of the film is bonded to an overlapping portion of the insulator by heating and/or by heating and melting a portion of the insulation material.

The electrical conductor arrangement according to embodiments described herein offers an advantageous alternative to traditional VPI (Vacuum Pressure Impregnation) technology and the mica-resin mainwall insulation, which is produced by lapping of mica tape, impregnation with liquid thermosetting resin and heat curing. The electrical conductor arrangement according to embodiments described herein offers many advantages such as better electrical performance due to possibly higher temperature rating and lower partial discharge (PD), reduced processing time for the insulation, simplified processing steps as well as less environmental, health and safety issues. In some embodiments, the electrical conductor arrangement according to embodiments described herein can be used for lapped cables (for example for large HVDC cables) replacing mass-impregnation technology, for HV bushings replacing resin-paper or resin-fabric impregnation processes or for capacitors for better layer interfaces.

According to a further aspect of the invention, a method for producing an electrically insulated electrical conductor is provided. The method includes providing an electrical conductor; and arranging at least one film comprising a first edge portion and an electrical insulation material for forming an insulator for electrically insulating the conductor. The method further includes bonding the first edge portion of the at least one film to an overlapping portion of the insulator by heating and/ or by heating and melting a portion of the insulation material.

Embodiments described herein allow for simplifying the process for insulating an electrical conductor compared to the VPI technology and the mica-resin mainwall insulation concept. A simplified process results in decreased production costs, which in turn influence the costs for the end product. Further, the method according to embodiments described herein is less time consuming than the known processes and, therefore, may help increasing the productivity of a production line. In addition, the method according to embodiments described herein avoids a degradation of the insulation material due to heat applied during processing.

### Brief Description of the Drawings

The subject matter of the invention will be explained in more detail in the following text with reference to advantageous exemplary embodiments that are illustrated in the drawings, in which:
Figure 1a is a schematic drawing of an electrical conductor arrangement provided with an insulator according to embodiments described herein;
Figure 1b is a schematic partial and more detailed view of the electrical conductor arrangement provided with an insulator according to embodiments described herein;
Figure 1c is a schematic sectional view of the electrical conductor arrangement of Fig. 1b along line A-A according to embodiments described herein;
Figure Id is a schematic partial view of a film of the insulator of an electrical conductor arrangement according to embodiments described herein;
Figure 2a is schematic drawing of an electrical conductor arrangement provided with an insulator according to embodiments described herein;
Figure 2b is a schematic partial and more detailed view of the electrical conductor arrangement of Fig. 2a according to embodiments described herein;
Figure 3 is a schematic view of an apparatus for producing an electrical conductor arrangement according to embodiments described herein;
Figure 4 shows a flow chart of a method for producing an electrically insulated electrical conductor according to embodiments described herein; and
Figure 5 shows a schematic view on a cut cross section of a sample of an electrical conductor arrangement according to embodiments described herein.

The reference symbols used in the drawings and their meanings are listed in summary form in the list of reference symbols. In principle, identical parts are provided with the same reference symbols in the figures.

### Ways of working the invention

According to embodiments described herein, an electrical conductor arrangement is provided, which in particular is used in electrical power equipment, in particular rotating machines. For instance, the electrical conductor arrangement according to embodiments described herein may be used in an electrical machine, a cable, a capacitor, a bushing, electrical motors, generators, and/or transformers.

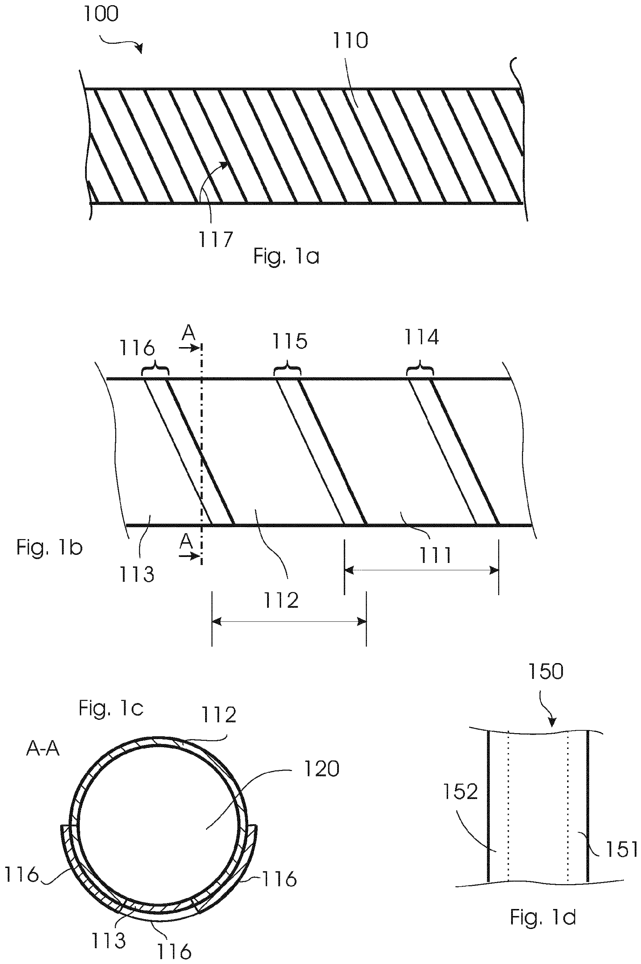

Figure 1a shows an example of the electrical conductor arrangement 100 including an insulator or insulation 110 for electrically insulating the conductor. The example of Figure 1a shows a longitudinal conductor, of which a section is drawn. The insulator 110 is formed from at least one film (in the example of Figure 1a, the insulator is formed from one film). Figure Id shows an embodiment of a film 150, which may be used for forming the insulator 110 according to embodiments described herein. The film 150 provides a first edge portion 151 and a second edge portion 152.

Typically, an edge portion of the film as referred to herein may be a portion of the film starting at the edge of the film and extending inwardly or towards the centre of the film in width direction (the width direction being substantially perpendicular to the length direction of the film). In Figure 1d, the edge portions 151 and 152 are shown in dashed lines. According to some embodiments, the edge portion 151 and/or 152 of the film 150 may include an area of 40 cm to 200 cm of the film beginning at the edge of the film. In some embodiments, the edge portion 151 and/or 152 of the film may typically include up to 50% of the film width beginning at the edge of the film, more typically up to 20% of the film width, and even more typically about 5% of the film width. The width of the edge portion may depend on the film dimension and may be chosen accordingly. In addition, the width of the edge portion may depend on the material of the film, the desired insulation, the intended application of the film and/or the conductor to be isolated, the operation range of the conductor to be isolated and the like. In one example, according to some embodiments, the portion of the film overlapping with a previously provided film around the conductor may occupy up to 100% of the film width. In such a case, different sections along the film length may be rolled one atop of another.

In an electrical conductor arrangement according to embodiments described herein, a first edge portion of the film 150 is bonded to the insulator on the conductor. Typically, the first edge portion of the film 150 is bonded to an insulator, which is already present on or around the conductor, when the film is laid on or around the conductor. According to some embodiments, the first edge portion can be described as being bonded to an overlapping portion of the insulator. For instance, the overlapping portion of the insulator results from a film being laid over a portion of the insulator already present on or around the conductor. Typically, the insulator being already present on or around the conductor may be a section of the film providing the edge portion to be bonded to the insulator.

Figure 1b shows a more detailed view of the electrical conductor arrangement and the insulator 110 including the overlapping portions 114, 115, 116. In Figure 1b, the outer edge of an overlapping portion (which is the edge not covered by a further film) is drawn in thicker lines than the inner edge (which is covered by the subsequent film winding being provided on or around the conductor). For instance, a first section 111 of a film is provided on the conductor first. After that, a second section 112 of the film is provided, partially overlapping with the first section 111, in particular overlapping with the first section 111 of the film in the overlapping portion 115. Typically, the first edge of the second section 112 of the film is bonded to the overlapping portion 115 of the insulator (in this example: the first section 111 of the film) by heating and melting the insulation material present in the film. A third section 113 of the film is provided on or around the conductor, again having an edge portion, which is bonded to an overlapping portion 116 of the second section 112 of the film by heating and melting. The skilled person may imagine that the whole length of the conductor may be provided with consecutively provided sections of one or more films. According to some embodiments, the first section of the film provided on the conductor may be fixed to the conductor by an adhesive at the side facing the conductor, as will be explained in detail below.

According to some embodiments, the film may be described as being helically wound around the conductor in some examples, as shown in the example of Figure 1b. Thereby, every winding of the helically wound film may include a portion, which overlaps with the insulator already present on or around the conductor, or a previous section of the film itself. In particular, two or more films may be helically wound on top of another, e.g. by consecutively winding the films on the conductor (and/or the already present insulator on the conductor) or by alternatively winding the films on the conductor and/or the already present insulator on the conductor.

Figure 1c shows a sectional view of the electrical conductor arrangement 100 along line A-A shown in Figure 1b. The conductor 120 is surrounded over a wide range of his diameter with the second section 112 of the film. At the lower part of the conductor, the third section 113 of the film lays on the conductor 120. In the sectional view of Figure 1c, the overlapping portion 116 can be seen, which is partly shown in a cut view (at the sides of the conductor 120) and is partly shown as a plan view at the lower part of the conductor 120. The skilled person will understand that the terms of direction used herein (such as "lower", "side", "top" and the like) are not meant to limit the orientation of the conductor, but only serves for the sake of an easier understanding of the exemplarily drawn figures.

The conductor 120 is shown as a conductor with a substantially circular cross-section in the figures. However, according to some embodiments, the conductor may be provided in any suitable shape and any size, which a conductor to be insulated may have. In addition, although the conductor is exemplarily shown in Fig. 1c as one piece, the conductor as referred to herein may also be a bundle of several conductors. In some embodiments, the conductor may be a wound conductor. For instance, the conductor including a bundle of small conductors may be provided in the form of a wound conductor, such as a coil or a Roebel bar. Alternatively, it may be a cable, or a conductor having any suitable cross-sectional shape (including different shapes of the single conductors being arranged to a bundle, and/or the shape of the bundle itself), such as round, oval, rectangular, prismatic, triangular and the like.

According to some embodiments, the film may surround the conductor at least partially (e.g., when the insulator is not yet completed during the production of the conductor arrangement according to embodiments described herein). In some embodiments, the film may be provided in the form of a tape, a sheet, a fabric, an insulating paper, and/or a laminate. In some embodiments, the film may include a thermoplastic material. In other embodiments, the film may include tapes (all kind of) with outer adhesive e.g. curable (such as a resin) and non-curable (such as low molecular weight polymers) materials. For instance, a curable material may be heated for provoking a chemical reaction for providing the bonding in the overlapping portion.

Embodiments described herein thus relate to an electrical conductor arrangement and a method for producing electrically insulated bodies, esp. longitudinal conductors such as coils, wires and cables, by so-called laser assisted tape winding. To this end and according to some embodiments described herein, a thermoplastic tape may mechanically be wound around the conductor, and the consecutively overlapping layers are simultaneously heating and melting the top surfaces (e.g. by laser welding). In some embodiments, a roller may ensure further consolidation of the molten layers, which may be different layers or films as will be explained in detail below. With the number of turns - as well as the thickness of the film(s) - the final thickness of the insulation can be controlled. Different ways for movement for continuous lapping are possible: Either the conductor moves and/or the tape supply moves with the laser source.

As mentioned, a laser source may be used for heating and melting the overlapping portions of the insulator. In the following description, it will mainly be referred to laser welding for providing the bonding, although there are several options for heating and melting the film, such as by using a heat gun or other heat sources. Compared to other heat assisted tape winding using heat sources such as cartridge heaters and hot gases, an IR laser can locally be applied with a high energy density and is, thus, advantageous with regard to his effectiveness. This allows efficient melting of the top surfaces for milliseconds and optimum interfaces between the layers without any material degradation.

The general principle and term used for embodiments described herein were described with respect to Figures 1a to 1d. In the following, examples for modifications and variations are described. The skilled person will understand that the features of the single embodiments described herein may be combined with other embodiments described herein, although it is not explicitly mentioned for every single feature.

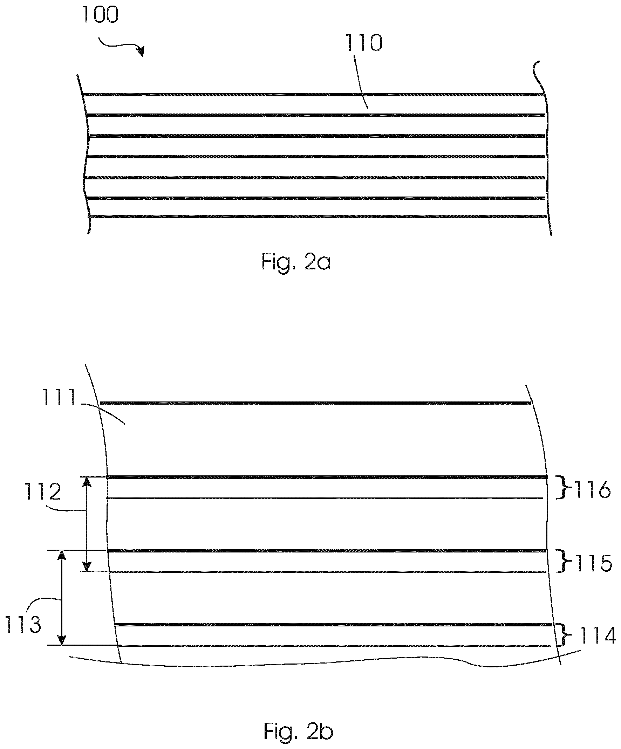

Figures 2a and 2b shows an embodiment in which the electrical conductor arrangement 100 provides a different angle of the film. The angle of the film is exemplarily indicated in Figure 1a by angle 117 measured between the length axis (the length direction being the direction with the largest extension) of the conductor and the edge of the film (either the outer, visible edge or the inner, invisible edge covered by the next section of the film). According to some embodiments, the angle 117 may be described as the wrapping angle of the film. In the example shown in Figure 1a, the angle 117 is about 65°. According to some embodiments, the wrapping angle of an electrical conductor arrangement according to embodiments described herein may be between 0° and about 90°. For instance, Figure 2a shows a wrapping angle of 0°. In other words, the film is laid on the conductor along the length direction of the conductor. The skilled person will understand that every angle between 0° and 90° may be used without being explicitly mentioned in the description and/or the drawings.

In Figure 2b, a more detailed view of a part of the electrical conductor arrangement 100 of Figure 2a is shown. In an analogue manner as depicted in Figure 1b, Figure 2b shows overlapping portions 114, 115, and 116 of the insulator 110 provided on or around the conductor 120. The overlapping portions 114, 115, and 116 overlap in a direction substantially perpendicular to the length direction of the conductor. According to some embodiments described herein, the insulator 110 provided by a film exemplarily includes a first section 111, a second section 112, and a third section 113, each having an edge portion as described in detail above. Thus, the overlapping portion 116 is formed by an overlap of edge portions of the first section 111 and the second section 112, and the overlapping portion 115 is formed by an overlap of edge portions of the second section 112 and the third section 113. Further overlapping portions may be provided and the number of overlapping portions or turns of the film is not limited to the simplified examples shown in the figures.

According to some embodiments, which may be combined with other embodiments described herein, the insulator may include more than one film. For instance, the insulator may include two films (e.g. a first film and a second film) being laid around the conductor in an alternating manner. In particular, the second film may overlap with an edge portion of the first film being already provided on or around the conductor. In some embodiments, the different films may be laid on or around the conductor in several layers. For instance, the first film may firstly be laid on the conductor, and after that the second film may be laid on the conductor and bonded to the first film (and/or to an overlapping portion of the second film) by heating and melting. According to some embodiments, the number of the films in the insulator may be chosen dependent on the conductor to be isolated, the electrical machine, in which the conductor is to be used, the voltages applied and further parameter of the conductor or of the intended operation, as the skilled person will understand. According to some embodiments, a film may be provided having different layers. For instance, the film may be a multi-layer film. In one embodiment, the film includes an adhesive, or includes an adhesive at a part of the film, e.g. at the beginning of the film, where the film is to be wrapped around the conductor for the first time. In particular, an adhesive may be provided at a side of the film facing the conductor (120). By providing an adhesive, the film may be fixed to the conductor, even if no insulator is yet present for fixing the film thereon by heating and melting. That means that the adhesive provided with the film may be an adhesive suitable for fixing the film to a conductive material, such as a metal like copper or the like. According to some embodiments, different layers of the film may be provided having different melting temperatures. In particular at least one surface layer of the multi-layer film has a lower melting temperature than another layer in the multi-layer film. For instance, an outer layer or surface layer of the film (e.g. a layer not intended to face the conductor) may have a relatively low melting temperature compared to other layers of the film. Additionally or alternatively, the surface layer going to face the conductor may have a relatively low melting temperature compared to other layers of the film. Providing one or more surface layers with relatively low melting temperatures (compared to other layers in the multi-layer film) may help melting only the surface layer of a film, rendering the process efficient and ensuring a proper and predictable effect of the laser on the film and, especially, a defined melting depth. In one example, the film may include three layers with adhesive layers on both sides of the film (the outer side and the inner side, which is the side intended to face the conductor).

According to embodiments described herein, the film includes one or more further layers. The film includes a semiconductive or field grading material. Typically, the term "semiconductor" as used in this context should be understood as a material, which has electrical conductivity between that of a conductor (such as copper) and that of an insulator (such as glass). According to some embodiments, the semiconductive material in the film may have a conductivity value between typically about 10⁻⁵ S/m and about 10³ S/m at 20°C, and more typically a conductivity value of between about 10 to about 10² S/m at 20°C. Compared thereto, a conductor as referred to herein may be understood as a material having the property of transmitting electricity. Typically, a conductor as referred to herein may have a conductivity value equal to or greater than 10³ S/m at 20°C. The insulator, or insulation material as used herein, may be understood as a material that resists electricity. The conductivity of the insulation material may typically be of from about 1*10⁻⁸ to about 1^{∗}10⁻²⁰ S/m at 20 °C, and more typically from 1^{∗}10⁻⁹ to 1^{∗}10⁻¹⁶. For example, the conductivity of Al₂O₃ is from 10⁻¹⁰ to 10⁻¹² S/m.

In one example, a multi-layer tape is used, containing e.g. various thermoplastic materials, additional adhesive layers or even aluminum or other metal sheets. In some applications, a metal layer may be part of the tape, e.g. provided either as a full metal layer or a polymeric multi-layer film with evaporated / deposited metal. Furthermore, if functional layers are needed - for example for inner or outer corona protection - the tapes can be made of or include semiconductive or field grading materials by use of conductive (carbon black) or field grading (ZnO or SiC) fillers. However, the skilled person may understand that the film is still to provide an insulator for the conductor. Thus, the multi-layer film may be made of non-conductive compounds by use of non-conductive fillers or low amount of carbon particles (such as < 0.5 wt-%). In particular, laser assisted tape processing is currently used mainly with carbon fiber based tapes due to the capability of carbon black to absorb IR laser energy for conversion into heat. The carbon fiber, however, works against the insulation properties of the film as desired for embodiments described herein.

In some embodiments, the multi-layer film allows providing several layers of (different) material on or around the conductor at once. For instance, the film may include a material that increases the reaction of the material upon incidence of a laser source, such as a faster or more efficient heating, melting or the like. According to some embodiments described herein, the laser active material may be Nanopigment Lumogen IR 1050, Iriotec 8825; NIR 1003P, LWA983A, and/or LWA267 and may be added to one of the layers of the film, or to all layers of the film. According to some embodiments, these materials are laser active as well as non-conductive, thereby particularly useful for the insulator to be formed by the film. In some embodiments, only parts of the film may contain such a laser active material, e.g. an edge portion 151 or 152 of film 150 as shown in Figure Id. In some embodiments, only a surface portion of the film may be provided with a laser active material.

According to some embodiments, the laser active material may have a wavelength absorption range of typically between about 100 nm to about 10 000 nm, more typically between about 200 nm and about 10 000 nm, and even more typically between about 500 nm and about 10 000 nm.

Generally, the film may include a wide range of insulation materials. For instance, the film may include from commodities to high performance thermoplastics resisting high temperatures and electric fields, filled (silica, alumina or mica) and fiber- (e.g. basalt or glass) or fabric-reinforced (e.g. glass cloth) materials for optimized mechanical properties and the like. In some embodiments, thermoplastic materials, such as high performance thermoplastics such as PES, PESU, PBT, PP, PEEK or PSU, may be used. Furthermore, in some embodiments, fiber-free tapes may typically be used for having better material interfaces and less voids as well as lower material costs. In other examples, thermosetting materials in combination with glass fibers may be used. Generally, among the possibly used materials for the film a film may be used provided with an outer adhesive e.g. curable (resin) and non-curable (low molecular weight polymers). For instance, a curable material may be forced to perform a chemical reaction for bonding the overlapping portions of the insulator and the edge portions of the film together.

Typically, the surface of the conductor may be roughened so as to increase the adhesion between the conductor and the film, especially when the film is laid directly on or around the conductor. For instance, the first winding of a tape may be in direct contact with the conductor. In some embodiments, a surface of the film may be in contact with the conductor except for one edge portion overlapping with the insulator. In particular, the surface of the conductor may be roughened by sandblasting, chemicals, pre-treatment, cleaning, chemical/physical activation or the like.

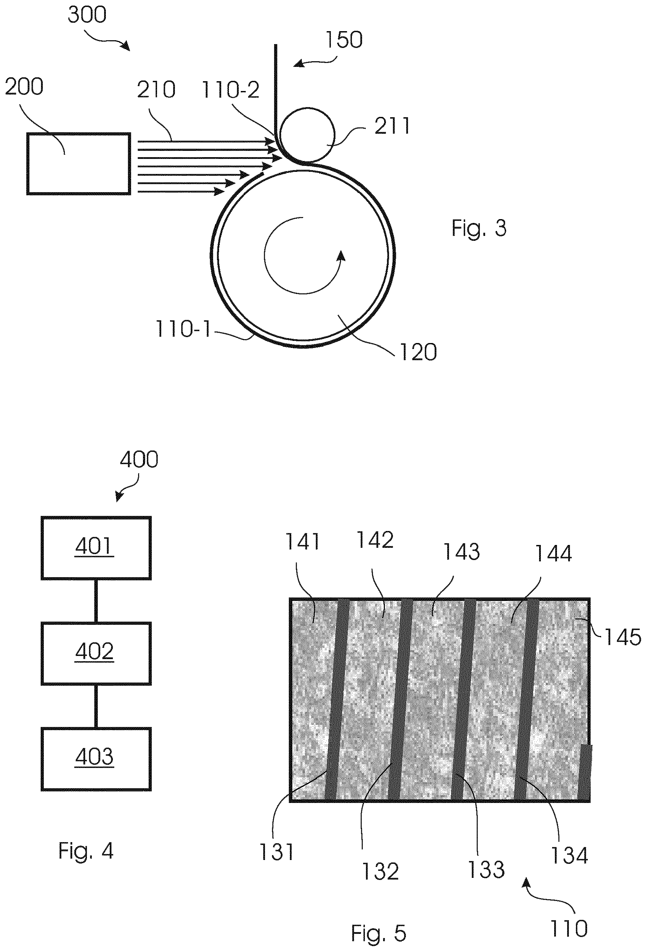

Figure 3 shows an example of equipment 300, which may be used for producing an electrical conductor arrangement according to embodiments described herein. The conductor 120 is shown which may, as mentioned above, be rotated about its longitudinal axis. The rotation of the conductor 120 is exemplarily shown by an arrow within the conductor. The equipment 300 may include a mandrel for supporting the conductor during the processing. The equipment 300 may further include a consolidation roller 211, which may provide guidance and, eventually, some pressure to the film 150 to be laid on the conductor 120.

According to some embodiments described herein, the equipment may further include a laser 200 producing beams 210 of laser light, e.g. in a wavelength range between typically 100 nm and about 10 000 nm, more typically between about 200 nm and about 10 000 nm, and even more typically between about 500 nm and about 10 000 nm. In some embodiments, a laser source may be placed at the winding head of today's winding equipment for mica tape and high voltage coils. Alternatively or additionally to the rotation of the conductor, the laser sources (e.g. two laser sources may be used in some embodiments) can be moved within a circle following the rollers of the mica tapes.

A film 150 is provided, which is intended to form the insulator for the conductor 120. The film 150 is shown having two sections: a first section 110-1 being already present on or around the conductor 120 and thus already forming a part of the insulator, and a second section 110-2 , which is intended to be laid on or around the conductor 120. The laser beams are directed to the surface of the film section 110-1 and/or to the film section 110-2, in particular at a portion, where the film section 110-2 is going to contact the film section 110-1. According to some embodiments, the laser beams 210 may be directed to a portion of the film section 110-1, which may be described as an edge portion of the film section 110-1, or which may be described as an overlapping portion of the film section 110-1 or of the insulator being present on or around the conductor 120.

Typically, the laser 200 and the film material of the film 150 are chosen so that the laser beams 210 heat the film 150, at least on the surface of the film 150. In particular, the laser beams heat the material of the film (especially in both sections 110-1 and 110-2 of the film 150) until the material of the film melts at least partially, e.g. on the surface. When the film section 110-2 is laid on the molten surface of the film section 110-1, the film section 110-1 (or, in more detail, the edge portion thereof) is bonded to the film section 110-1 (which may be described as providing the insulator for the conductor).

According to some embodiment, an axial movement of either the conductor 120 or the equipment 300 may be provided for consecutively covering the whole length of the conductor with the film, thereby forming an insulator for the conductor.

As can be seen in Figure 3, the conductor arrangement according to embodiments described herein, may be produced by "in-situ" welding for heating/melting the film material and lapping simultaneously the film on the or around the conductor.

Figure 4 shows a flowchart of a method for producing an electrically isolated electrical conductor according to embodiments described herein. The method 400 may for instance be performed by an arrangement as shown in Figure 3. The method includes in box 401 providing an electrical conductor, which may be an electrical conductor as described in embodiments above. For instance, the electrical conductor may be a longitudinal conductor, like a cable, a coil, a bar, or the like. In one example, the conductor may be made of copper, or may include copper to a large extent.

In box 402, the method 400 includes arranging one or more film(s). In one example, arranging the film may include arranging the film on or around the conductor, e.g. in direct contact with the conductor, or in contact with a layer provided on the conductor. According to some embodiments, arranging the film may include helically winding the film around the conductor. For instance, the film may be wound around the conductor in an angle (such as the angle 117 shown in Figure 1a) between 0° and about 90°. The film may include a first edge portion, as exemplarily shown in Figure 1d (edge portion 151). Further, the film includes an electrical insulation material for forming an insulator for electrically insulating the conductor. In particular, the film may form the insulator after being arranged on or around the conductor.

According to embodiments described herein, box 403 includes bonding the first edge portion of the film to an overlapping portion of the insulator formed on or around the conductor. According to some embodiments, the insulator present on or around the conductor may not yet be fully isolating, e.g. by providing a layer of semiconductive material. The skilled person will understand that the insulator, to which the edge portion of the film is bonded, is fully developed when the method for producing an insulation for the electrical conductor is terminated. For the sake of a concise description, the film is nevertheless described as being bonded to the insulator. Typically, the bonding is performed by heating, and especially by heating and melting a portion of the insulation material. In some embodiments, the heating may provoke a chemical reaction for bonding the film to the insulator, such as in the case of curable materials.

According to some embodiments, which may be combined with other embodiments described herein, heating and melting a portion of the insulation material includes heating and melting portions of the surface of the film. In particular, the heating and melting includes heating and meting the surface of the portion of the film going to overlap with the insulator, as exemplarily shown in Figures 1b and 2b in overlapping portions 114, 115, and 116. The skilled person may understand that, as described above, some embodiments may achieve a bonding of the film and the insulator provided on or around the conductor by heating and a chemical reaction, in particular in the edge portion of the film. The features described with respect to the method referring to "heating and melting" may thus also be used when using "heating and a chemical reaction."

In some embodiments, arranging the film may include winding a tape comprising insulation material around the conductor in several windings. This may be understood as a tape winding process, in particular a laser assisted tape winding process. The windings may be arranged in an angle of between 0° and about 90°, as exemplarily shown in Figures 1b and 2b. The laser assisted tape winding process may be performed by directing a laser, such as laser beams 210 shown in Figure 3 to the surface of a winding wound on the conductor, such as an insulator or semiconductive layer being already wound on the conductor. Alternatively, or additionally, the laser may be directed to a surface of a film going to be laid/wound on the conductor, e.g. second section 110-2 of the film 150 shown in Figure 3.

According to embodiments described herein, the bonding by heating and melting the film causes the film to include molten portions and unmolten portions. Figure 5 shows an analysis of the insulator of the conductor arrangement according to embodiments described herein. Typically, the analysis may be performed by scanning electron microscope techniques. Figure 5 shows molten portions 131, 132, 133, 134, which were molten and subsequently solidified, and unmolten portions 141, 142, 143, 144, 145, which were not molten. The molten portions 131, 132, 133, and 134 provide the bonding effect of the overlapping portions of the insulator with the edge portions of the film. Going shortly back to Figure 1b or 2b, the overlapping portions 114, 115, 116 of the film may typically include the molten portions. According to embodiments described herein, the morphology of the molten portions 131, 132, 133, and 134, which were molten and subsequently solidified, and the morphology of the unmolten portions 141, 142, 143, 144, 145 differs. In Figure 5, the difference in the morphology is shown by different colors and patterns of the respective portions. In addition, Figure 5 shows that the molten portions 131, 132, 133, and 134 are smaller in the width direction than the unmolten portions 141, 142, 143, 144, and 145. The smaller area is a result of the good directionality of the laser and the precise welding of the film material (including heat impact in only the portions which are to be bonded). In particular, the unmolten portions have a morphology being not modified compared to the molten portions. According to some embodiments, the modification of the morphology may include modifications in the material structure, the crystallinity, the density, the distribution of single components of the material, the content of single components of the material and the like.

In the following, a short test will be described for showing the feasibility of the embodiments described herein. In particular, the question arises about the presence of voids between the welded layers after laser assisted tape winding. According to some embodiments, a tube with 5 mm wall thickness, inner diameter of 100 mm and length of 200 mm (by lapping on a mandrel) was produced. In this case, HDPE tapes with carbon fibers were used. The tube was analyzed by X-ray CT (computed tomography) at various locations. The analysis showed that in-situ welding was successful and more importantly, that no voids are present after processing. Further analysis may be made by SEM (scanning electron microscope) or X-ray analyses on samples with 4 welded layers of HDPE tape manufactured by laser assisted tape placement (flat samples). Figure 5 discussed above shows a schematic drawing of such an analysis. The layers are bonded well together. Furthermore, FT-IR spectroscopy and DSC measurements have shown that no material degradation occurred during the processing. According to some embodiments described herein, a degradation of the material was avoided since the heat source was only applied or directed to the film for milliseconds, which is in particular possible by using laser welding techniques. For instance, the full heat (close to melting temperature of the film surface) may only be applied for a few milliseconds; however, the skilled person may understand that there may be residual heat remaining after the first short heat treatment.

The electrical conductor arrangement according to embodiments described herein may withstand long term electrical fields in a range of about 1-5 kV/mm, and/or short term electrical fields in a range of about 10-100 kV/mm.

According to some embodiments, the electrical conductor arrangement may typically be used in high voltage (HV) electrical machines. Generally, an electrical machine as referred to herein may be an electrical machine for high voltages. For instance, the electrical machine and the electrical conductor arrangement according to embodiments described herein may be adapted for a rated voltage being typically larger than 1 kV, more typically larger than about 5 kV, and even more typically larger than about 10 kV. According to some embodiments, the rated voltage may be in a range between about 1 kV to about 14 kV.

Embodiments described herein mainly refer to the specific application for HV rotating machines for manufacturing electrical "main-wall" insulation on conductor coils and bars. Typically, the insulation layer provided in embodiments described herein is configured for providing the main insulation or main wall insulation of the wound conductor. According to some embodiments, lapping technology is used with a thermoplastic tape and laser heating for in-situ welding. With this, all other efficient processing steps for winding conductors and shaping the coils will still remain. Only the labor-intensive and costly impregnation with resin and curing will be avoided as desired.

According to embodiments described herein, the electrical conductor arrangement and the method for producing an electrical conductor arrangement as described herein may provide several advantages. In particular, a dry manufacture of lapped insulation, esp. for longitudinal conductors such as coils, wires or cables becomes possible. Further, as shown in the example test above, the electrical conductor arrangement and the method according to embodiments described herein achieve no or very low partial discharge of the dry lapped insulation. No wet chemistry is used in comparison to today's state of the art with lapping, impregnation and curing. Thus, overall lower production costs with shorter production cycles and environmentally friendly process. Especially for rotating machine applications, the additional advantages of: possibly higher temperatures and higher electrical stress level allowed and higher efficiency of the full machine, should be mentioned.

Though the present invention has been described on the basis of some preferred embodiments, those skilled in the art should appreciate that those embodiments should by no way limit the scope of the present invention that is defined by the accompanied claims. Without departing from the scope of the present invention, any variations and modifications to the embodiments should be within the apprehension of those with ordinary knowledge and skills in the art, and therefore fall in the scope of the present invention that is defined by the accompanied claims.

### Reference numerals

- 100: electrical conductor arrangement
- 110: film
- 110-1: first section of the film, laid on the conductor
- 110-2: second section of the film to be laid on the conductor
- 111, 112, 113: first, second and third section of the film
- 114, 115, 116: overlapping portions
- 117: wrapping angle
- 120: conductor
- 131-134: molten portions of the insulator
- 141-145: unmolten portions of the insulator
- 150: film
- 151, 152: edge portions of the film
- 200: laser
- 210: laser beams
- 211: consolidation roller
- 300: equipment
- 400: flowchart for method
- 401-403: boxes of the flowchart for method

## Claims

1. An electrical conductor arrangement (100) for an electrical machine, the conductor arrangement comprising:
- an electrical conductor (120); and
- an insulator (110) for electrically insulating the conductor (120) comprising an electrical insulation material;
wherein the insulator (110) comprises at least one film (150) including a first edge portion (151) and wherein the first edge portion (151) is bonded to an overlapping portion (114, 115, 116) of the insulator (110) by heating and melting a portion of the insulation material, and
wherein the film (150) comprises a non-conductive and laser active material, and wherein the film is a multi-layer film comprising a semiconductive material or field grading material.

2. The electrical conductor arrangement according to claim 1, wherein the insulator provides a plurality of overlapping portions (114, 115, 116).

3. The electrical conductor arrangement according to any of the preceding claims, wherein the first edge portion (151) of the film (150) is bonded by laser welding and/or wherein the insulator (110) is provided by laser assisted tape winding.

4. The electrical conductor arrangement according to any of the preceding claims, wherein the electrical insulation material is a thermoplastic material.

5. The electrical conductor arrangement according to any of the preceding claims, wherein the insulator comprises two or more films (150) being helically wound on top of one another and bonded to each other by heating and melting.

6. The electrical conductor arrangement according to any of the preceding claims, wherein the at least one film (150) is a tape, a sheet, a fabric, an insulating paper, and/or a laminate.

7. The electrical conductor arrangement according to any of the preceding claims, wherein the film (150) comprises layers of different materials.

8. The electrical conductor arrangement according to any of the preceding claims, wherein the film (150) comprises an adhesive and/or wherein the film (150) is including layers of materials having different melting temperatures.

9. The electrical conductor arrangement according to any of the preceding claims, wherein the film (150) comprises a material being laser-active at a wavelength of about 100 nm to about 10 000 nm.

10. The electrical conductor arrangement according to any of the preceding claims, wherein the conductor (120) is a conductor coil or bar for a high voltage rotating machine.

11. Power equipment having an electrical conductor arrangement according to any of the preceding claims.

12. A method (400) for producing an electrically insulated electrical conductor, comprising:
Providing an electrical conductor (120);
Arranging at least one film (150) comprising a first edge portion (151) and an electrical insulation material for forming an insulator (110) for electrically insulating the conductor (120), wherein the film (150) further comprises a non-conductive and laser active material, and wherein the film is a multi-layer film comprising a semiconductive material or field grading material;
Bonding the first edge portion (151) of the at least one film (150) to an overlapping portion (114, 115, 116) of the insulator (110) by heating and melting a portion of the insulation material.

13. The method according to claim 12, wherein a laser source is applied to a portion of the insulation material for about 1 to about 50 milliseconds and/or
wherein heating and melting is performed by laser welding; and/or
wherein heating and melting a portion of the insulation material comprises directing a laser (200, 210) to the surface of the conductor and/or insulator (110-1) being present around the conductor (120) and/or to a surface of a film (150; 110-2) going to be laid on the conductor (120) and the insulator.

14. The method according to any of claims 12 to 13, wherein the method (400) is a method for providing longitudinal conductors (120) with an insulation material and/or wherein the method is a method for providing coils, wires, cables and bars with an insulation material.

## Patentansprüche

1. Elektrische Leiteranordnung (100) für eine elektrische Maschine, wobei die Leiteranordnung umfasst:
- einen elektrischen Leiter (120); und
- einen Isolator (110), der ein elektrisches Isoliermaterial umfasst, zum elektrischen Isolieren des Leiters (120);
wobei der Isolator (110) mindestens einen Film (150) umfasst, der einen ersten Randabschnitt (151) umfasst, und wobei der erste Randabschnitt (151) durch Erhitzen oder Schmelzen eines Teils des Isoliermaterials an einen überlappenden Abschnitt (114, 115, 116) des Isolators (110) gebondet ist, und
wobei der Film (150) ein nichtleitendes und laseraktives Material umfasst, und
wobei der Film ein Mehrschichtfilm ist, der ein Halbleitermaterial oder ein feldgradierendes Material umfasst.

2. Elektrische Leiteranordnung nach Anspruch 1, wobei der Isolator eine Mehrzahl von überlappenden Abschnitten (114, 115, 116) bereitstellt.

3. Elektrische Leiteranordnung nach einem der vorhergehenden Ansprüche, wobei der erste Randabschnitt (151) des Films (150) durch Laserschweißen gebondet ist, und/oder wobei der Isolator (110) durch lasergestütztes Bandwickeln vorgesehen ist.

4. Elektrische Leiteranordnung nach einem der vorhergehenden Ansprüche, wobei das elektrische Isoliermaterial ein thermoplastisches Material ist.

5. Elektrische Leiteranordnung nach einem der vorhergehenden Ansprüche, wobei der Isolator zwei oder mehr Filme (150) umfasst, die spiralförmig aufeinander gewickelt und durch Erhitzen oder Schmelzen aneinander gebondet sind.

6. Elektrische Leiteranordnung nach einem der vorhergehenden Ansprüche, wobei der mindestens eine Film (150) ein Band, eine Folie, ein Gewebe, ein isolierendes Papier und/oder ein Laminat ist.

7. Elektrische Leiteranordnung nach einem der vorhergehenden Ansprüche, wobei der Film (150) Schichten aus verschiedenen Materialien umfasst.

8. Elektrische Leiteranordnung nach einem der vorhergehenden Ansprüche, wobei der Film (150) ein Haftmittel umfasst, und/oder wobei der Film (150) Schichten aus Materialien mit verschiedenen Schmelztemperaturen umfasst.

9. Elektrische Leiteranordnung nach einem der vorhergehenden Ansprüche, wobei der Film (150) ein Material umfasst, das bei einer Wellenlänge von etwa 100 nm bis etwa 10.000 nm laseraktiv ist.

10. Elektrische Leiteranordnung nach einem der vorhergehenden Ansprüche, wobei der Leiter (120) eine Leiterspule oder eine Leiterschiene für ein drehende Hochspannungsmaschine ist.

11. Generatoranlage mit einer elektrischen Leiteranordnung nach einem der vorhergehenden Ansprüche.

12. Verfahren (400) zur Herstellung eines elektrisch isolierten elektrischen Leiters, umfassend:
Bereitstellen eines elektrischen Leiters (120);
Anordnen mindestens eines Films (150), der einen ersten Randabschnitt (151) umfasst, und eines elektrischen Isoliermaterials zum Bilden eines Isolators (110) zum elektrischen Isolieren des Leiters (120), wobei der Film (150) ferner ein nichtleitendes und laseraktives Material umfasst, und wobei der Film ein Mehrschichtfilm ist, der ein Halbleitermaterial oder ein feldgradierendes Material umfasst;
Bonden des ersten Randabschnitts (151) des mindestens einen Films (150) durch Erhitzen und Schmelzen eines Teils des Isoliermaterials an einen überlappenden Abschnitt (114, 115, 116) des Isolators (110).

13. Verfahren nach Anspruch 12, wobei eine Laserquelle für etwa 1 bis etwa 50 Millisekunden auf einen Teil des Isoliermaterials angewendet wird; und/oder
wobei das Erhitzen und Schmelzen durch Laserschweißen durchgeführt wird; und/oder
wobei das Erhitzen und Schmelzen eines Teils des Isoliermaterials ein Richten eines Lasers (200, 210) auf die Oberfläche des Leiters und/oder des um den Leiter (120) vorhandenen Isolators (110-1) und/oder eine Oberfläche eines Films (150; 110-2) umfasst, der auf den Leiter (120) und den Isolator gelegt wird.

14. Verfahren nach einem der Ansprüche 12 bis 13 ist, wobei das Verfahren (400) ein Verfahren zur Bereitstellung von längslaufenden Leitern (120) mit einem Isoliermaterial ist, und/oder wobei das Verfahren ein Verfahren zur Bereitstellung von Spulen, Drähten, Kabeln und Stäben mit einem Isoliermaterial ist.

## Revendications

1. Agencement de conducteur électrique (100) pour une machine électrique, l'agencement de conducteur comprenant :
- un conducteur électrique (120) ; et
- un isolant (110) pour isoler électriquement le conducteur (120), comprenant un matériau d'isolation électrique ;
dans lequel l'isolant (110) comprend au moins un film (150) comportant une première partie de bord (151) et dans lequel la première partie de bord (151) est assemblée à une partie de chevauchement (114, 115, 116) de l'isolant (110) par chauffage et fusion d'une partie du matériau d'isolation, et
dans lequel le film (150) comprend un matériau non conducteur et actif laser, et
dans lequel le film est un film multicouche comprenant un matériau semi-conducteur ou un matériau à gradient de champ.

2. Agencement de conducteur électrique selon la revendication 1, dans lequel l'isolant fournit une pluralité de parties de chevauchement (114, 115, 116).

3. Agencement de conducteur électrique selon l'une quelconque des revendications précédentes, dans lequel la première partie de bord (151) du film (150) est assemblée par soudage laser et/ou dans lequel l'isolant (110) est obtenu par enroulement de ruban assisté par laser.

4. Agencement de conducteur électrique selon l'une quelconque des revendications précédentes, dans lequel le matériau d'isolation électrique est un matériau thermoplastique.

5. Agencement de conducteur électrique selon l'une quelconque des revendications précédentes, dans lequel l'isolant comprend au moins deux films (150) qui sont enroulés hélicoïdalement l'un au-dessus de l'autre et assemblés l'un de l'autre par chauffage et fusion.

6. Agencement de conducteur électrique selon l'une quelconque des revendications précédentes, dans lequel l'au moins un film (150) est un ruban, une feuille, un tissu, un papier isolant, et/ou un stratifié.

7. Agencement de conducteur électrique selon l'une quelconque des revendications précédentes, dans lequel le film (150) comprend des couches de différents matériaux.

8. Agencement de conducteur électrique selon l'une quelconque des revendications précédentes, dans lequel le film (150) comprend un adhésif et/ou dans lequel le film (150) comporte des couches de matériaux ayant différentes températures de fusion.

9. Agencement de conducteur électrique selon l'une quelconque des revendications précédentes, dans lequel le film (150) comprend un matériau qui est actif laser à une longueur d'onde d'environ 100 nm à environ 10 000 nm.

10. Agencement de conducteur électrique selon l'une quelconque des revendications précédentes, dans lequel le conducteur (120) est une bobine ou barre conductrice pour une machine tournante haute tension.

11. Équipement d'alimentation électrique ayant un agencement de conducteur électrique selon l'une quelconque des revendications précédentes.

12. Procédé (400) destiné à produire un conducteur électrique isolé électriquement, comprenant :
l'obtention d'un conducteur électrique (120) ;
l'agencement du moins un film (150) comprenant une première partie de bord (151) et un matériau d'isolation électrique pour former un isolant (110) destiné à isoler électriquement le conducteur (120), le film (150) comprenant en outre un matériau non conducteur et actif laser, et le film étant un film multicouche comprenant un matériau semi-conducteur ou un matériau à gradient de champ ;
l'assemblage de la première partie de bord (151) de l'au moins un film (150) à une partie de chevauchement (114, 115, 116) de l'isolant (110) par chauffage et fusion d'une partie du matériau d'isolation.

13. Procédé selon la revendication 12, dans lequel une source laser est appliquée à une partie du matériau d'isolation pendant environ 1 à environ 50 millisecondes ; et/ou
dans lequel un chauffage et une fusion sont effectués par soudage laser ; et/ou
dans lequel le chauffage et la fusion d'une partie du matériau d'isolation comprennent l'acheminement d'un laser (200, 210) jusqu'à la surface du conducteur et/ou de l'isolant (110-1) qui est présent autour du conducteur (120) et/ou jusqu'à une surface d'un film (150 ; 110-2) allant être déposé sur le conducteur (120) et l'isolant.

14. Procédé selon l'une quelconque des revendications 12 à 13, le procédé (400) étant un procédé destiné à obtenir des conducteurs longitudinaux (120) avec un matériau d'isolation, et/ou le procédé étant un procédé destiné à obtenir des bobines, des fils, des câbles et des barres avec un matériau d'isolation.
